# EUROPÄISCHE PATENTSCHRIFT

(11) **EP 3 172 003 B1**
(45) Veröffentlichungstag und Bekanntmachung des Hinweises auf die Patenterteilung: **06.06.2018**
(21) Anmeldenummer: 15766736.1
(22) Anmeldetag: 23.07.2015
(51) Int. Cl.: B23B 41/00, B23C 3/02, B23Q 3/06, B23Q 11/00, B23B 39/00, B23C 1/06

(54) **VORRICHTUNG ZUR BEARBEITUNG EINER FELGE UND VERFAHREN ZUR VERWENDUNG EINER VORRICHTUNG ZUR BEARBEITUNG EINER FELGE**
DEVICE FOR THE WORKING OF A WHEEL RIM AND METHOD OF USING A DEVICE FOR THE WORKING OF A WHEEL RIM
DISPOSITIF D'USINAGE D'UNE JANTE ET PROCÉDÉ D'UTILISATION D'UN DISPOSITIF D'USINAGE D'UNE JANTE

(30) Priorität: 26.07.2014 DE 102014010877
(43) Veröffentlichungstag der Anmeldung: 31.05.2017
(73) Patentinhaber: G + K Umformtechnik GmbH, 63843 Niedernberg (DE)
(72) Erfinder: KUNKEL, Michael, 63843 Niedernberg/M. (DE); GRÖSCHL, Normen, 63843 Niedernberg (DE)
(74) Vertreter: Nitz, Astrid
(86) Internationale Anmeldenummer: PCT/DE2015/000367
(87) Internationale Veröffentlichungsnummer: WO 2016/015700

(56) Entgegenhaltungen:
- BE-A- 451 342
- CN-A- 103 862 080
- DE-A1- 3 035 505
- DE-C1- 4 339 755
- DE-U1- 20 309 308
- US-A- 1 995 485

## Beschreibung

Die Erfindung betrifft eine Vorrichtung zur Bearbeitung einer Felge nach dem Oberbegriff von Anspruch 1, die aus dem Dokument DE 30 35 505 A bekannt ist, und ein Verfahren zur Verwendung einer Vorrichtung zur Bearbeitung einer Felge nach dem Oberbegriff von Anspruch 8, das aus dem Dokument US 1 995 485 A bekannt ist. Bekannt ist eine Vorrichtung zur Bearbeitung einer Felge, insbesondere Leichtmetallfelge, wobei die die Radnabe ausgestanzt wird, wodurch es gelegentlich zu Spannungen in der Felge kommen kann.

DE 30 35 505 A1, BE 451 341 A, US 1 995 485 zeigen Materialbearbeitungsverfahren, insbesondere Felgenbearbeitungsverfahren, wobei die Felgen durch ein oder mehrere Zentrierungsmittel gehalten werden, die jedoch aufwendig ausgeführt sind oder zu Verspannungen der Felgen führen können.

Aufgabe der vorliegenden Erfindung ist es, unter Vermeidung der Nachteile des Stands der Technik eine einfache, zuverlässige und schnelle Vorrichtung zur Bearbeitung einer Felge bereitzustellen.

Die Aufgabe wird gelöst durch eine Vorrichtung gemäß Anspruch 1 zur Bearbeitung einer Felge für ein Fahrzeug, insbesondere ein Automobil oder LKW, umfassend ein Mittel zur Auflage der Felge, Mittel zur Zentrierung der Felge, Mittel zur Materialherausarbeitung, insbesondere spanenden Bearbeitung, wobei die Felge mit der Innenseite in eine Richtung nach unten auf dem Mittel zur Auflage angeordnet ist und seitlich vom Mittel zur Zentrierung, insbesondere zwei Mitteln zur Zentrierung, die gegenüberliegend angeordnet sind, gehalten ist, wobei die Felge mit einer zentralen Radnabenachse im Wesentlichen konzentrisch hinsichtlich einer Bearbeitungsachse des Mittels zur Auflage und/oder eines vorbestimmten Bearbeitungsradius um die Bearbeitungsachse auszurichten ist, wobei in einem Radnabenbereich aus einer Richtung der Innenseite der Felge mit dem Mittel zur Materialherausarbeitung, insbesondere spanenden Bearbeitung eine Materialausarbeitung, insbesondere Bohrung durch das Mittel zur Auflage hindurch in den Radnabenbereich durchführbar ist, wobei das Mittel zur Auflage der Felge einen Schutzeinsatz, insbesondere ein trichterförmiges Element, aufweist und in eine Innenseite der Felge einführbar ist, wobei insbesondere der Schutzeinsatz, insbesondere das trichterförmige Element, zumindest bei der Materialausarbeitung, insbesondere Bohrung, derart angeordnet ist, dass es einen Außenbereich der Felge im Wesentlichen gegen Herausdringen von Materialausarbeitungsspänen, insbesondere Bohrspänen abdichtet.

Die Erfindung ermöglicht insbesondere eine akkurate und schnelle Entfernung eventueller Angussreste im Bereich der Radnabe, auch Zapfen oder Steiger genannt, im Bereich einer Radnabe bei Aluminiumfelgen, die im Niederdruckgießverfahren hergestellt werden, die häufig Lunker enthalten und dementsprechend Qualitätsmindernd sind. Die Entfernung der Reste erfolgt derart, dass sie durch die Schwerkraft nach unten fallen und nicht auf der Felge liegenbleiben. Zudem ist eine Entfernung im Durchlauf möglich, ohne aufwendige Einzelpositionierung der Felgen. Durch die Erfindung wird somit eine Späneproblematik eliminiert und Störungen im Spannfutter umgangen.

Vorteilhaft ist es, wenn das Mittel zur Materialherausarbeitung, insbesondere spanenden Bearbeitung umfasst ein Mittel zum Bohren und/oder ein Mittel zum Fräsen, insbesondere einen Fräseinsatz, insbesondere mit einem kleinerem Durchmesser als ein Durchmesser der Materialausarbeitung in der Felge, insbesondere mit einem Mittel zum im Wesentlichen kreisförmigen und/oder helixförmigen Führen des Fräseinsatzes.

Vorteilhaft ist es, wenn der Schutzeinsatz, insbesondere das trichterförmige Element, lediglich einen Durchgang zum Radnabenbereich aufweist, der an einen Materialausarbeitungsdurchmesser, insbesondere einen Bohrerdurchmesser und/oder Fräseinsatz, insbesondere für eine Kreisbewegung, angepasst ausgebildet ist.

Vorteilhaft ist es, wenn die Felge durch ein Mittel zum Niederdrücken der Felge auf dem Mittel zur Auflage im Wesentlichen festgesetzt ist

Vorteilhaft ist es, wenn das Mittel zum Niederdrücken, welches insbesondere mindestens ein Kraftelement, insbesondere einen Kraftkolben, aufweist, insbesondere einen oder mehrere Hydraulikkolben, und/oder ein tellerförmiges Element umfasst, das von oben auf die Felge aufzusetzen ist und wodurch ein Druck gegen das Mittel zur Auflage auszuüben ist.

Vorteilhaft ist es, wenn das das tellerförmige Element Aussparungen für das Mittel zur Zentrierung aufweist.

Vorteilhaft ist es, wenn die Felge durch ein Mittel zum Transport der Felge, insbesondere ein Band umfassend Transportrollen, insbesondere angetrieben durch das Mittel zur Zentrierung, zu dem Mittel zur Auflage der Felge zu transportieren ist.

Die Aufgabe wird ebenfalls gelöst durch ein Verfahren gemäß Anspruch 8 zur Verwendung einer Vorrichtung zur Bearbeitung einer Felge für ein Fahrzeug, insbesondere ein Automobil, insbesondere nach einem der Ansprüche 1 bis 7, wobei die Felge auf ein Mittel zur Auflage der Felge mit einer Innenseite in eine Richtung nach unten aufgelegt wird, wobei das Mittel zur Auflage einen Schutzeinsatz, insbesondere ein trichterförmiges Element, aufweist, welcher in einen Innenbereich der Felge eingeführt wird, die Felge durch ein oder mehrere Mittel zur Zentrierung der Felge in eine Zentrierungsposition eingeführt und gehalten wird, und die Felge mit einer zentralen Radnabenachse im Wesentlichen konzentrisch hinsichtlich einer Bearbeitungsachse des Mittels zur Auflage und/oder eines vorbestimmten Bearbeitungsradius ausgerichtet wird, wobei in einem Radnabenbereich aus der Richtung der Innenseite der Felge mit einem Mittel zur Materialherausarbeitung, insbesondere spanenden Bearbeitung, eine Materialausarbeitung, insbesondere Bohrung durch ein Mittel zum Bohren und/oder ein Mittel zum Fräsen, insbesondere einen Fräseinsatz, durch das Mittel zur Auflage hindurch in den Radnabenbereich durchgeführt wird.

Vorteilhaft ist es, wenn durch ein Mittel zum im Wesentlichen kreisförmigen Führen eines Fräseinsatzes insbesondere zusätzlich eine zu einem kreisförmigen Führen senkrechten Tiefenstrecke durchgeführt werden kann, so dass insbesondere eine helixförmige Frässtrecke beschrieben wird.

Vorteilhaft ist es, wenn das Mittel zur Materialherausarbeitung zur Bearbeitung in dem Radnabenbereich zu bewegen ist, insbesondere anzunähern und/oder auf einer Bewegungsbahn, insbesondere Kreisbahnlinie und/oder Helixbahn mit einem Mittel zum Fräsen, zu führen ist und/oder die Felge relativ zum Mittel zur Materialherausarbeitung zu bewegen ist.

Vorteilhaft ist es, wenn die Materialausarbeitung, insbesondere spanende Bearbeitung, insbesondere Bohrung und/oder Fräsung nur so weit durchgeführt wird, bis ein geringer Rest des auszuarbeitenden, insbesondere auszubohrenden Radnabenbereichs in Richtung Außenseite der Felge stehenbleibt und anschließend eine gesonderte Entfernung des Rests, insbesondere eine Ausstanzung des Rests durch ein Mittel zum Stanzen und/oder ein Absaugen mittels starken Unterdrucks erfolgt.

Vorteilhaft ist es, wenn zunächst die Felge über ein Mittel zum Transport, auf dem die Felge mit der Innenseite nach unten aufliegt, und zentriert durch die seitlich angeordneten Mittel zur Zentrierung bis zum Mittel zur Auflage transportiert wird, anschließend der Schutzeinsatz, insbesondere das trichterförmige Element, von unten gegen die Innenseite der Felge ausgefahren wird und ein Mittel zum Niederdrücken, umfassen insbesondere ein tellerförmiges Element, von oben auf die Felge drückt, und anschließend mit dem Mittel zur Materialherausarbeitung, insbesondere spanenden Bearbeitung, die Materialaushebung, insbesondere Bohrung durch einen Durchgang das trichterförmigen Elements hindurch in den Radnabenbereich der Felge hinein erfolgt, wobei der Schutzeinsatz, insbesondere das trichterförmige Element, anschießend wieder in das Mittel zur Auflage zurückgefahren wird, wobei insbesondere anschließend die bearbeitete Felge nach dem Rückfahren des Schutzeinsatzes, insbesondere des trichterförmigen Elements, auf dem Mittel zum Transport weitertransportiert wird.

Vorteilhaft ist es, wenn der Schutzeinsatz, insbesondere das trichterförmige Element, im Bereich des Durchgangs im Wesentlichen dicht an die Innenseite der Felge angepasst gepresst wird, so dass ausgearbeitetes Material, insbesondere Bohrspäne im Innenbereich des Schutzeinsatzes verbleiben.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind.

Es zeigen:
- Fig. 1: eine erfindungsgemäße Vorrichtung zur Bearbeitung in perspektivischer Ansicht,
- Fig. 2: eine erfindungsgemäße Vorrichtung zur Bearbeitung in Teilaufsicht,
- Fig. 3: eine erfindungsgemäße Vorrichtung zur Bearbeitung in perspektivischer Ansicht,
- Fig. 4: eine erfindungsgemäße Vorrichtung zur Bearbeitung in Schnittdarstellung,
- Fig. 5: eine erfindungsgemäße Vorrichtung zur Bearbeitung in Schnittdarstellung,
- Fig. 6: einen Ausschnitt einer erfindungsgemäßen Vorrichtung zur Bearbeitung in Schnittdarstellung,
- Fig. 7: eine erfindungsgemäße Vorrichtung zur Bearbeitung in Schnittdarstellung,
- Fig. 8: eine erfindungsgemäße Vorrichtung zur Bearbeitung in Schnittdarstellung,
- Fig. 9: eine erfindungsgemäße Vorrichtung zur Bearbeitung in Schnittdarstellung,
- Fig. 10: eine erfindungsgemäße Vorrichtung zur Bearbeitung in Schnittdarstellung und
- Fig. 11: eine erfindungsgemäße Vorrichtung zur Bearbeitung in schematischer Ansicht.

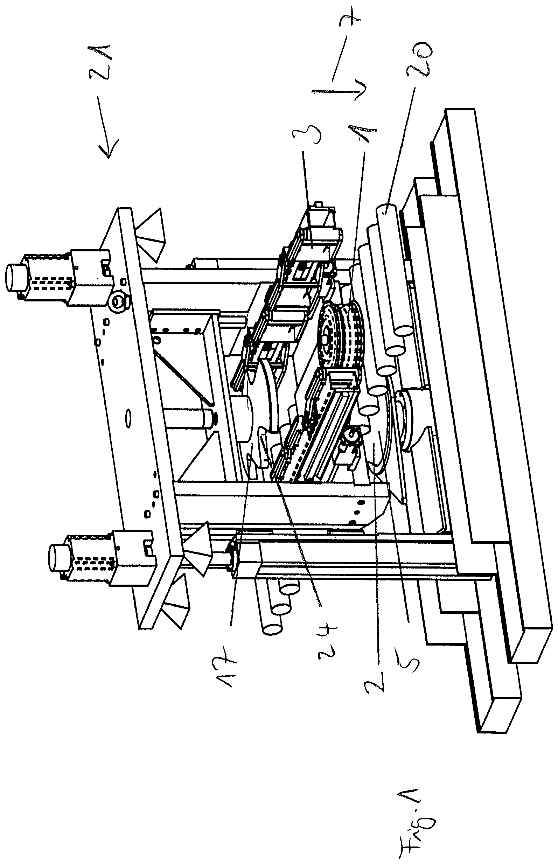

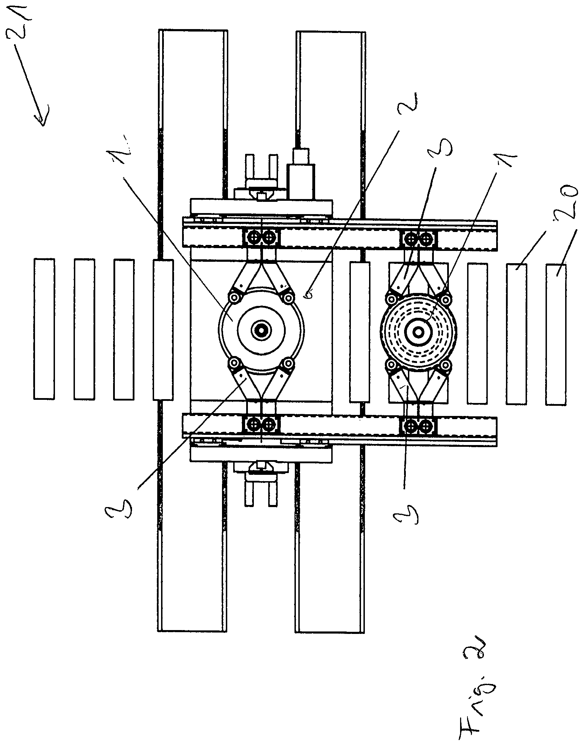

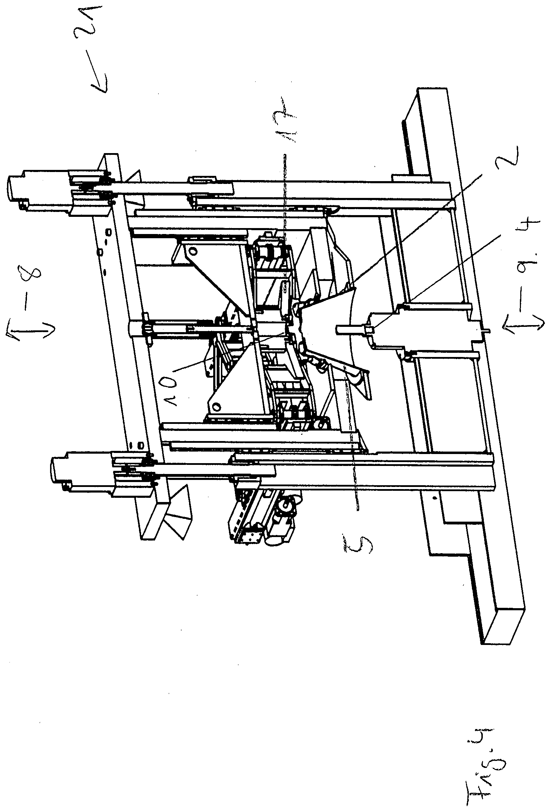

Fig. 1 eine erfindungsgemäße Vorrichtung 21 zur Bearbeitung in perspektivischer Ansicht. Die Vorrichtung 21 ist erfindungsgemäß vorgesehen zur Bearbeitung einer Felge 1 für ein Fahrzeug, insbesondere ein Automobil. Über ein Mittel zum Transport 19 mit beispielhaften Transportrollen 20 wird eine Felge 1 zu einem Mittel zur Auflage 2 im Zentrum der Vorrichtung 21 geliefert. Die Vorrichtung 21 umfasst beispielhaft das Mittel zur Auflage 2 der Felge, ein Mittel zur Zentrierung 3 der Felge, ein nicht sichtbares Mittel zum Bohren. Ein Mittel zum Niederdrücken 17, das auf die Felge aufgesetzt wird, weist ein tellerförmiges Element 18 mit Aussparungen 24 für Mittel zur Zentrierung 3 auf. Das Mittel zur Auflage 2 der Felge weist ein trichterförmiges Element 5 auf und ist in eine Innenseite der Felge 2 einführbar, wie beispielhaft in Fig. 4 dargestellt. Die Felge 1 ist mit der Innenseite in eine Richtung 7 nach unten auf dem Mittel zur Auflage 2 angeordnet ist und seitlich vom Mittel zur Zentrierung 3, insbesondere zwei Mitteln zur Zentrierung 3, die gegenüberliegend angeordnet sind, gehalten, beispielhaft dargestellt in Fig. 2.

Fig. 2 eine erfindungsgemäße Vorrichtung zur Bearbeitung 21 in Teilaufsicht. Über das Mittel zum Transport 19 mit Transportrollen 20 werden zwei Felgen 1 nacheinander transportiert und durch die Mittel zur Zentrierung 3 mittig gehalten und insbesondere bis zum Mittel zur Auflage 2 transportiert. Mittel zum Transport 19 kann dargestellt auch zugleich die Zentrierung als Mittel zur Zentrierung 3 bewirken, um die Felge 1 mittig zu positionieren. Sobald eine Felge fertig gebohrt ist, wird sie mit dem Mittel zum Transport über das Mittel zur Zentrierung, nachdem dieses auf die neue Felge umgegriffen hat, gepackt und weitertransportiert.

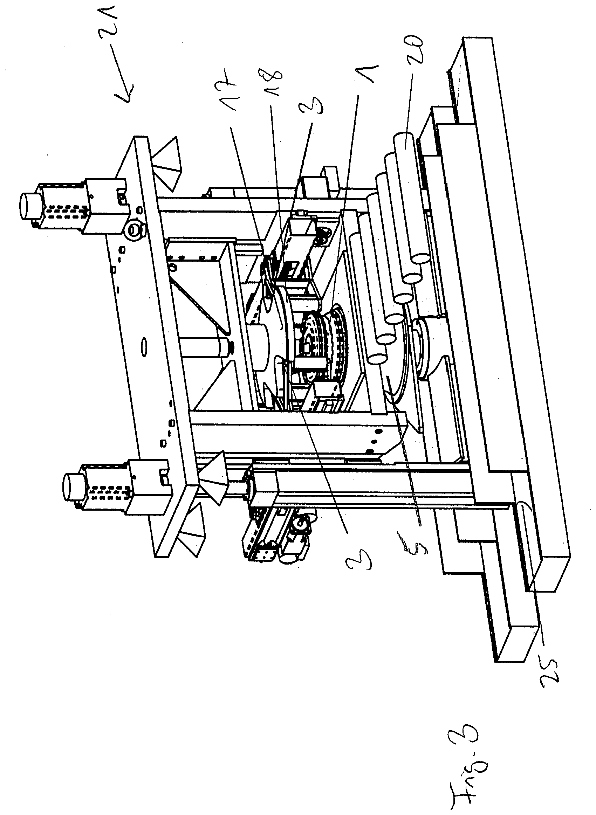

Fig. 3 eine erfindungsgemäße Vorrichtung zur Bearbeitung 21 in perspektivischer Ansicht. Ein tellerförmiges Element 18 eines Mittels zum Niederdrücken 17 mit Aussparungen 24 senkt sich gerade auf die Felge 1 herab, die auf einem Mittel zur Auflage 2 liegt und über Transportrollen 20 angeliefert wurde. Von unten wird ein trichterförmiges Element 5 herangeführt. Die Bohrspäne können später in einem Bohrspäneauffang 25 gesammelt werden.

Fig. 4 eine erfindungsgemäße Vorrichtung zur Bearbeitung 21 in Schnittdarstellung.

Die Felge 2 ist mit einer zentralen Radnabenachse 8 im Wesentlichen konzentrisch hinsichtlich einer Bearbeitungsachse 9 des Mittels zur Auflage 2 auszurichten. Die Felge wird durch ein Mittel zum Niederdrücken 17 festgesetzt. In einem Radnabenbereich 10 ist aus einer Richtung 11 der Innenseite 6 der Felge 2 mit dem Mittel zum Bohren 4 eine Bohrung durch das trichterförmige Element 5 des Mittels zur Auflage 2 hindurch in den Radnabenbereich 10 durchführbar.

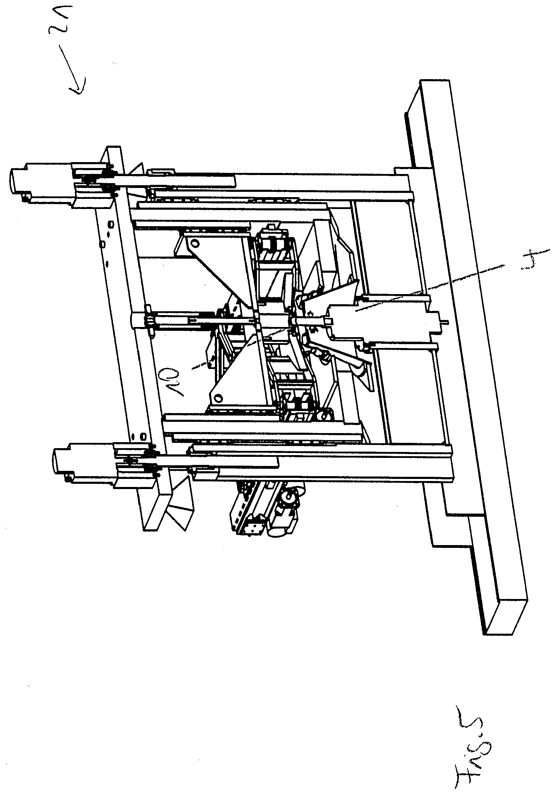

Fig. 5 eine erfindungsgemäße Vorrichtung zur Bearbeitung 21 in Schnittdarstellung. Das Mittel zu Bohren 4 ist bis zum Radnabenbereich 10 durchgebohrt worden.

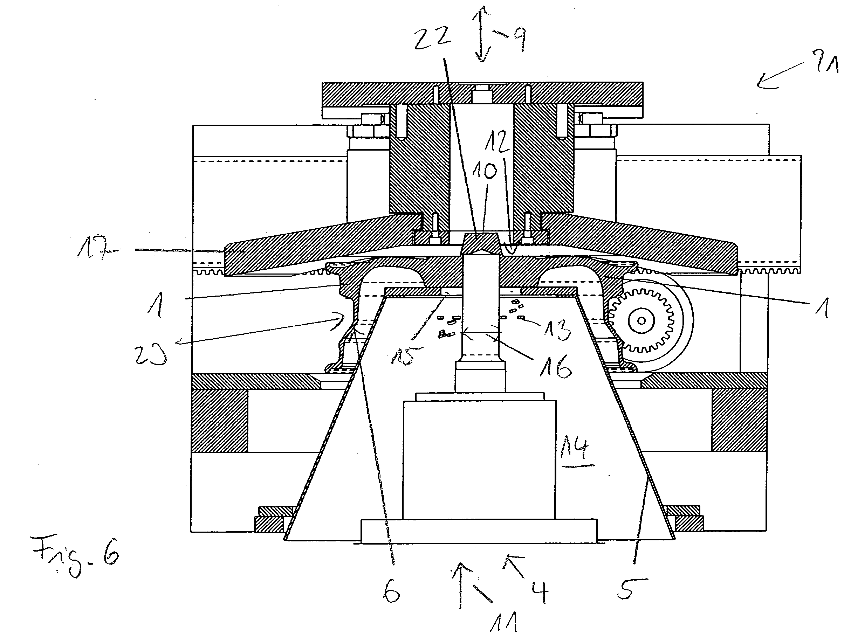

Fig. 6 einen Ausschnitt einer erfindungsgemäßen Vorrichtung 2 zur Bearbeitung in Schnittdarstellung. Das trichterförmige Element 5 ist zumindest beim Bohren derart angeordnet, dass es bei einem Bohren aus einer Richtung 11 der Innenseite 6 der Felge 1 mit dem Mittel zum Bohren 4 eine Bohrung durch das trichterförmige Element 5 hindurch in den Radnabenbereich 10 durchführbar ist. Das trichterförmige Element 5 dichtet gegen Herausdringen von Bohrspänen 13 in einen Außenbereich 12 ab. Die Bohrspäne 13 fallen in den Innenbereich 14 der Felge 1. Das trichterförmige Element 5 weist lediglich einen Durchgang 15 zum Radnabenbereich 10 auf, der an einen Bohrerdurchmesser 16 angepasst ausgebildet ist. Die Felge 2 ist durch ein Mittel zum Niederdrücken 17 der Felge auf dem trichterförmigen Element 5 im Wesentlichen festgesetzt. Ein nach dem Bohren verbleibender Rest 22 kann mittels anschließendem Stanzen entfernt werden.

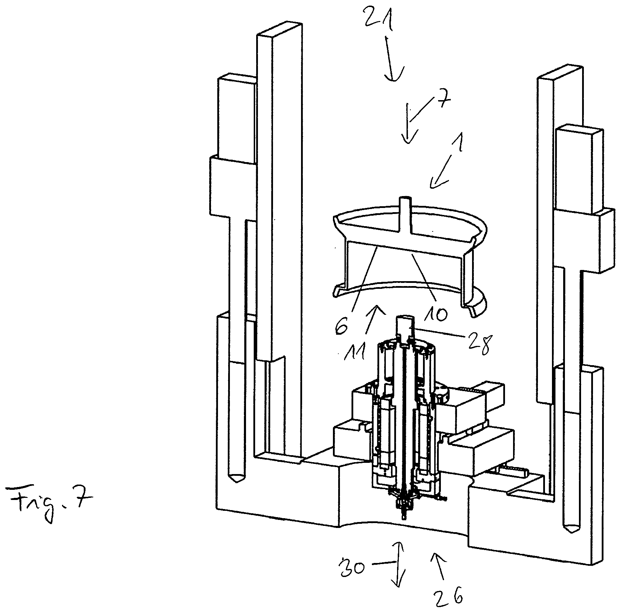

Fig. 7 zeigt eine erfindungsgemäße Vorrichtung 21 zur Bearbeitung einer Felge 1 in Schnittdarstellung, wobei das Mittel zur Materialherausarbeitung 26, insbesondere spanenden Bearbeitung, in diesem Fall einen Fräsvorgang in Kombination mit einer Kreisbewegung und/oder helixförmigen Verfahrbewegung eines Fräsmittels umfasst.

Angesetzt ist das Mittel zur Materialherausarbeitung 26 in einem Mittenbereich der Felge. Die Vorrichtung 21 zur Bearbeitung einer Felge 1 umfasst ein Mittel 26 zur Materialherausarbeitung, insbesondere spanenden Bearbeitung, wobei die Felge mit der Innenseite 6 in eine Richtung 7 nach unten gehalten ist, wobei die Felge 2 mit einer zentralen Radnabenachse 8 im Wesentlichen konzentrisch hinsichtlich einer zentralen Achse 30 der Kreisbewegung und/oder Helixbewegung auszurichten ist, wobei in einem Radnabenbereich 10 aus einer Richtung 11 der Innenseite 6 der Felge 1 mit dem Mittel zur Materialherausarbeitung 26, insbesondere spanenden Bearbeitung eine Materialausarbeitung, insbesondere ein Fräseinsatz 28 durch ein Mittel zur Auflage hindurch in den Felgennabenbereich 10 durchführbar ist.

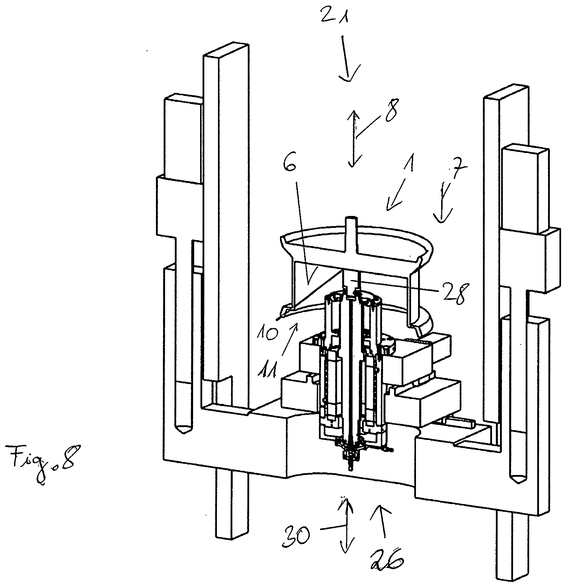

Fig. 8 zeigt eine erfindungsgemäße Vorrichtung 21 zur Bearbeitung in Schnittdarstellung, mit einem Mittel zur Materialherausarbeitung 26, mit einem Fräseinsatz 28 in einer seitlichen Kreisposition, wobei der Fräseinsatz insbesondere mit beispielhaft etwa 12.000 Umdrehungen geführt werden kann.

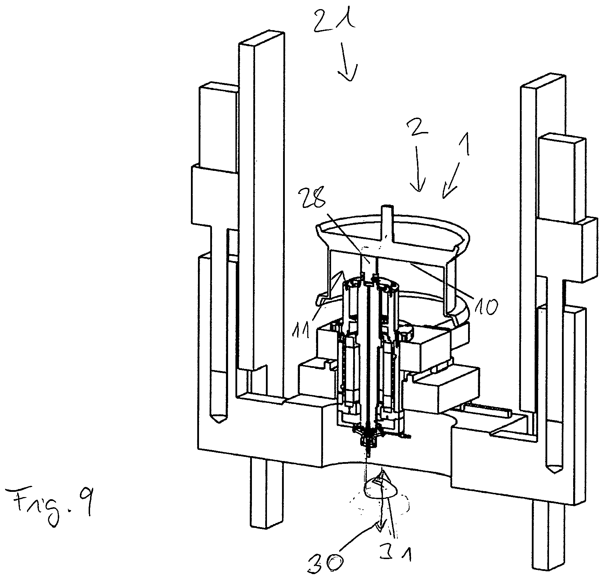

Fig. 9 zeigt eine erfindungsgemäße Vorrichtung 21 zur Bearbeitung in Schnittdarstellung mit einem Mittel zur Materialherausarbeitung 26, mit einem Fräseinsatz 28, der eine Seitenposition einnimmt, auf einer Kreisbewegungslinie 31. Vorteilhaft wird die Vorrichtung eingesetzt bei unterschiedlichen Durchmessern 32 der Materialausarbeitung in der Felge. Es wird vorteilhaft der kleinst mögliche Durchmesser als Fräsmittel gewählt um größere Felgeninnenbohrungen durch zirkulares, eventuell CNCgesteuertes Fräsen zu erzeugen. Ein gesteuerter Kreuztisch, ein Rundtisch oder eine andere geeignete Vorrichtung bewirkt eine Bewegung der Bohrspindel horizontal in X- und Y-Achse. Die Z-Achse bestimmt die Frästiefe/Bohrtiefe in der Felge.
Der gleiche Effekt des Zirkularfräsens könnte auch erzeugt werden durch Relativbewegung der Felge.

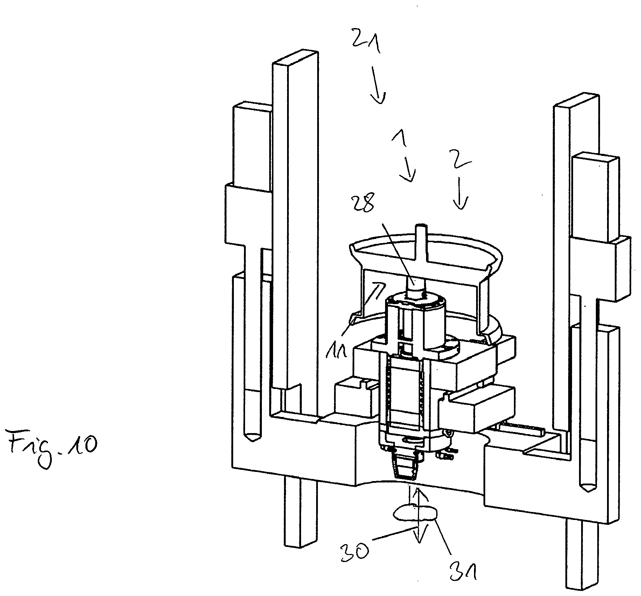

Fig. 10 zeigt eine erfindungsgemäße Vorrichtung 21 mit einem Fräseinsatz 28 zur Bearbeitung in Schnittdarstellung.

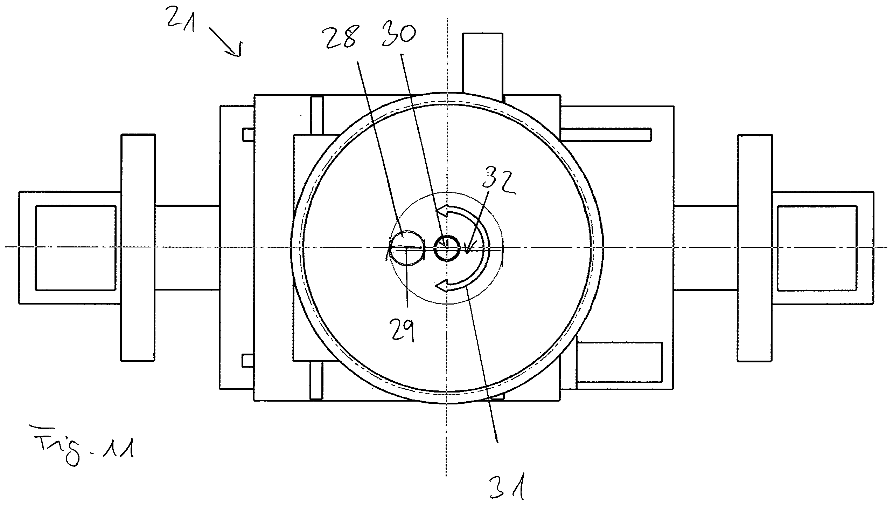

Fig. 11 zeigt eine erfindungsgemäße Vorrichtung 21 zur Bearbeitung in schematischer Ansicht.

### BEZUGSZEICHENLISTE

- 1: Felge
- 2: Mittel zur Auflage
- 3: Mittel zur Zentrierung
- 4: Mittel zum Bohren
- 5: trichterförmiges Element
- 6: Innenseite
- 7: Richtung
- 8: zentralen Radnabenachse
- 9: Bearbeitungsachse
- 10: Radnabenbereich
- 11: Richtung
- 12: Außenbereich
- 13: Bohrspäne
- 14: Innenbereich
- 15: Durchgang
- 16: Bohrerdurchmesser
- 17: Mittel zum Niederdrücken
- 18: tellerförmiges Element
- 19: Mittel zum Transport
- 20: Transportrolle
- 21: Vorrichtung zur Bearbeitung
- 22: Rest
- 23: Außenseite
- 24: Aussparung
- 25: Bohrspanauffang
- 26: Mittel zur Materialherausarbeitung
- 27: Mittel zum Fräsen
- 28: Fräseinsatz
- 29: Durchmesser
- 30: zentrale Achse
- 31: Kreisbewegungslinie
- 32: Durchmesser

## Patentansprüche

1. Vorrichtung (21) zur Bearbeitung einer Felge (1) für ein Fahrzeug, insbesondere ein Automobil oder LKW, umfassend ein Mittel zur Auflage (2) der Felge, Mittel zur Zentrierung (3) der Felge, Mittel (26) zur Materialherausarbeitung, insbesondere spanenden Bearbeitung, wobei die Felge mit der Innenseite (6) in eine Richtung (7) nach unten auf dem Mittel zur Auflage (2) angeordnet ist und seitlich vom Mittel zur Zentrierung (3), insbesondere zwei Mitteln zur Zentrierung (3), die gegenüberliegend angeordnet sind, gehalten ist, wobei die Felge (2) mit einer zentralen Radnabenachse (8) im Wesentlichen konzentrisch hinsichtlich einer Bearbeitungsachse (9) des Mittels zur Auflage (2) und/oder eines vorbestimmten Bearbeitungsradius um die Bearbeitungsachse (9) auszurichten ist, wobei in einem Radnabenbereich (10) aus einer Richtung (11) der Innenseite (6) der Felge (1) mit dem Mittel zur Materialherausarbeitung (26), insbesondere spanenden Bearbeitung (4) eine Materialausarbeitung, insbesondere Bohrung durch das Mittel zur Auflage (2) hindurch in den Radnabenbereich (1) durchführbar ist, **dadurch gekennzeichnet, dass** das Mittel zur Auflage (2) der Felge einen Schutzeinsatz, insbesondere ein trichterförmiges Element (5), aufweist und in eine Innenseite (6) der Felge einführbar ist, wobei der Schutzeinsatz, insbesondere das trichterförmige Element (5), zumindest bei der Materialausarbeitung, insbesondere Bohrung, derart angeordnet ist dass es einen Außenbereich (12) der Felge im Wesentlichen gegen Herausdringen von Materiatausarbeitungsspänen, insbesondere Bohrspänen (13) abdichtet.

2. Vorrichtung nach Anspruch 1, **dadurch gekennzeichnet, dass** das Mittel (26) zur Materialherausarbeitung, insbesondere spanenden Bearbeitung umfasst ein Mittel zum Bohren (4) und/oder ein Mittel zum Fräsen (27), insbesondere einen Fräseinsatz (28), insbesondere mit einem kleinerem Durchmesser (29) als ein Durchmesser (32) der Materialausarbeitung in der Felge, insbesondere mit einem Mittel zum im Wesentlichen kreisförmigen und/oder helixförmigen Führen des Fräseinsatzes (28).

3. Vorrichtung nach einem der Ansprüche 1 bis 2, **dadurch gekennzeichnet, dass** der Schutzeinsatz, insbesondere das trichterförmige Element (5), lediglich einen Durchgang (15) zum Radnabenbereich (10) aufweist, der an einen Materialausarbeitungsdurchmesser, insbesondere einen Bohrerdurchmesser (16) und/oder Fräseinsatz, insbesondere für eine Kreisbewegung, angepasst ausgebildet ist.

4. Vorrichtung nach einem der Ansprüche 1 bis 3, **dadurch gekennzeichnet, dass** die Felge (2) durch ein Mittel zum Niederdrücken (17) der Felge auf dem Mittel zur Auflage (2) im Wesentlichen festgesetzt ist

5. Vorrichtung nach einem der Ansprüche 1 bis 4, **dadurch gekennzeichnet, dass** das Mittel zum Niederdrücken (17), welches insbesondere mindestens ein Kraftelement, insbesondere einen Kraftkolben, aufweist, insbesondere einen oder mehrere Hydraulikkolben, und/oder ein tellerförmiges Element (18) umfasst, das von oben auf die Felge aufzusetzen ist und wodurch ein Druck gegen das Mittel zur Auflage (2) auszuüben ist.)

6. Vorrichtung nach einem der Ansprüche 1 bis 5, **dadurch gekennzeichnet, dass** das das tellerförmige Element (18) Aussparungen (24) für das Mittel zur Zentrierung (3) aufweist.

7. Vorrichtung nach einem der Ansprüche 1 bis 6, **dadurch gekennzeichnet, dass** die Felge durch ein Mittel zum Transport (19) der Felge, insbesondere ein Band umfassend Transportrollen (20), insbesondere angetrieben durch das Mittel zur Zentrierung (3), zu dem Mittel zur Auflage (2) der Felge zu transportieren ist.

8. Verfahren zur Verwendung einer Vorrichtung zur Bearbeitung (21) einer Felge (1) für ein Fahrzeug, insbesondere ein Automobil, insbesondere nach einem der Ansprüche 1 bis 7, wobei die Felge (1) auf ein Mittel zur Auflage (2) der Felge mit einer Innenseite (6) in eine Richtung (7) nach unten aufgelegt wird und die Felge durch ein oder mehrere Mittel zur Zentrierung (3) der Felge in eine Zentrierungsposition eingeführt und gehalten wird, **dadurch gekennzeichnet, dass** das Mittel zur Auflage (2) einen Schutzeinsatz, insbesondere ein trichterförmiges Element (5), aufweist, welcher in einen Innenbereich (14) der Felge eingeführt wird, und die Felge mit einer zentralen Radnabenachse (8) im Wesentlichen konzentrisch hinsichtlich einer Bearbeitungsachse (9) des Mittels zur Auflage (2) und/oder eines vorbestimmten Bearbeitungsradius ausgerichtet wird, wobei in einem Radnabenbereich (10) aus der Richtung (11) der Innenseite (6) der Felge mit einem Mittel zur Materialherausarbeitung (26), insbesondere spanenden Bearbeitung (4), eine Materialausarbeitung, insbesondere Bohrung durch ein Mittel zum Bohren (4) und/oder ein Mittel zum Fräsen (27), insbesondere einen Fräseinsatz (28), durch das Mittel zur Auflage (2) hindurch in den Radnabenbereich (10) durchgeführt wird.

9. Verfahren nach Anspruch 8, **dadurch gekennzeichnet, dass** durch ein Mittel zum im Wesentlichen kreisförmigen Führen eines Fräseinsatzes insbesondere zusätzlich eine zu einem kreisförmigen Führen senkrechten Tiefenstrecke durchgeführt werden kann, so dass insbesondere eine helixförmige Frässtrecke beschrieben wird.

10. Verfahren nach Anspruch 8 oder 9, **dadurch gekennzeichnet, dass** das Mittel zur Materialherausarbeitung (26) zur Bearbeitung in dem Radnabenbereich (10) zu bewegen ist, insbesondere anzunähern und/oder auf einer Bewegungsbahn, insbesondere Kreisbahnlinie (31) und/oder Helixbahn mit einem Mittel zum Fräsen (27), zu führen ist und/oder die Felge (1) relativ zum Mittel zur Materialherausarbeitung (26) zu bewegen ist.

11. Verfahren nach einem der Ansprüche 8 bis 10, **dadurch gekennzeichnet, dass** die Materialausarbeitung, insbesondere spanende Bearbeitung, insbesondere Bohrung und/oder Fräsung nur so weit durchgeführt wird, bis ein geringer Rest (22) des auszuarbeitenden, insbesondere auszubohrenden Radnabenbereichs (10) in Richtung Außenseite (23) der Felge stehenbleibt und anschließend eine gesonderte Entfernung des Rests (22), insbesondere eine Ausstanzung des Rests durch ein Mitte! zum Stanzen und/oder ein Absaugen mittels starken Unterdrucks erfolgt.

12. Verfahren nach einem der Ansprüche 8 bis 11, **dadurch gekennzeichnet, dass** zunächst die Felge (2) über ein Mittel zum Transport (19), auf dem die Felge mit der Innenseite (6) nach unten aufliegt, und zentriert durch die seitlich angeordneten Mittel zur Zentrierung (3) bis zum Mittel zur Auflage (2) transportiert wird, anschließend der Schutzeinsatz, insbesondere das trichterförmige Element (5), von unten gegen die Innenseite (6) der Felge ausgefahren wird und ein Mittel zum Niederdrücken (17), umfassen insbesondere ein tellerförmiges Element (18), von oben auf die Felge (2) drückt, und anschließend mit dem Mittel zur Materialherausarbeitung, insbesondere spanenden Bearbeitung (4), die Materialaushebung, insbesondere Bohrung durch einen Durchgang (15) das trichterförmigen Elements (18) hindurch in den Radnabenbereich (10) der Felge hinein erfolgt, wobei der Schutzeinsatz, insbesondere das trichterförmige Element (5), anschießend wieder in das Mittel zur Auflage (2) zurückgefahren wird, wobei insbesondere anschließend die bearbeitete Felge (2) nach dem Rückfahren des Schutzeinsatzes, insbesondere des trichterförmigen Elements (5), auf dem Mittel zum Transport (19) weitertransportiert wird.

13. Verfahren nach einem der Ansprüche 8 bis 12, **dadurch gekennzeichnet, dass** der Schutzeinsatz, insbesondere das trichterförmige Element (5), im Bereich des Durchgangs (15) im Wesentlichen dicht an die Innenseite (6) der Felge angepasst gepresst wird, so dass ausgearbeitetes Material, insbesondere Bohrspäne (13) im Innenbereich (14) des Schutzeinsatzes verbleiben.

## Claims

1. Device (21) to process a rim (1) for a vehicle, in particular a passenger car or truck, comprises a means to support (2) the rim, a means to centre (3) the rim, means (26) to handle material, in particular machining, whereat the rim with its inner surface (6) is positioned in a direction (7) facing downwards on the support device (2) and is supported laterally by the means to centre (3), in particular two means to centre (3), that are arranged on opposite sides, whereat the rim (2) is to be arranged with a central wheel hub axis (10) essentially concentrically in relation to a working axis (9) of the means to support (2) and/or a predetermined working radius around the working axis (9), whereat in an area of the central wheel hub axis (10) from a direction (11) of the inner surface (6) of the rim (1) with the means to handle material (26), in particular machining (4), a material processing is possible in particular drilling through the means to support (2) into the wheel hub area (10), **characterised by** that the means to support (2) of the rim has a protecting insert, especially a funnel-shaped element (5), and is insertable into an inner surface (6) of the rim, whereat especially the protecting insert, especially the funnel-shaped element (5), is arranged in such a way at least at the material processing, especially machining, that it seals an outer area (12) of the rim essentially against loosing of processed material swarfs, especial machined swarfs (13).

2. Device according to claim 1, **characterised by** that the material processing means (26), in particular machining, comprises a drilling means (4) and/or a milling means (27), in particular a milling insert (28), with a smaller diameter (29) than the diameter (32) of the material processing in the rim, in particular a means to perform mainly circular and/or helix-shaped motions of the milling means (28).

3. Device according to one of the claims 1 to 2, **characterised by** that the protecting insert, especially a funnel-shaped element (5), merely has a passage (15) to the area of the central wheel hub axis (10), which is arranged adapted at an material shaping diameter, especially a machining diameter (16) and/or milling insert, especially for circular motion.

4. Device according to one of the claims 1 to 3, **characterised by** that the rim (2) is mainly fixed by a means for pressing downward (17) of the rim on the support means (2).

5. Device according to one of the claims 1 to 4, **characterised by** that the a device for pressing downward (17), which has at least one power piston, in particular one or several hydraulic pistons, and/or a disc-shaped element (18) that is positioned on the rim from the top and presses it onto the support means (2).

6. Device according to one of the claims 1 to 5, **characterised by** that a disc-shaped element (18) has cut-outs (24) for the centering means (3).

7. Device according to one of the claims 1 to 6, **characterised by** that the rim is to be transported by a transport means (19), in particular a belt having transport rolls (20), in particular powered by the centering means (3) to the support means (2) of the rim.

8. Procedure to use a device to process (21) a rim (1) for a vehicle, in particular a passenger car or truck, in particular according to one of the claims 1 to 7, **characterised by** that the rim (1) is positioned on a support means (2) of the rim with a inner surface (6) in one direction (7) facing downwards, whereat the support means (2) has a protecting insert, especially a funnel-shaped element (5), that is inserted into an inner area (14) of the rim, the rim is positioned and hold by one or more means for centering (3) of the rim in a centering position and the rim is aligned with a central wheel hub shaft (8) mainly concentrically in relation to a processing axis (9) of the support means (2) and/or a predetermined processing radius
so that in a central wheel hub area (10) from the direction (11) of the inner surface (6) of the rim with the means to finish the material processing (26), in particular machining, a material processing is performed, especially a drilling by using a drilling means (4) and/or a milling means (27), in particular a milling insert (28) through the support means (2) into the wheel hub area (10).

9. Procedure according to claim 8, **characterised by** that a device to move the milling insert in circular motions in particular additionally to move it in circular motions on a vertical axis so that a helix-shaped milling line can be performed.

10. Procedure according to claim 8 or 9, **characterised by** that a material processing means (26) is to be moved into the wheel hub area (10) in particular to approach and/or move on a motion line, in particular a circular motion line (31) and/or a helix-shaped line with a milling means (27) and/or the rim (1) is to be moved relatively to the means to process the material (26).

11. Procedure according to the claims 8 to 10, **characterised by** that the material processing, in particular machining, in particular drilling and/or milling is performed only until a residual part (22) remains of the wheel hub area (10) that is processed, especially to be drilled, in the direction towards the outer surface (23) of the rim, and subsequently a separate removal of this leftover part (22) is performed, especially a stamp out of the left-over by a means for stamping and/or a vacuuming by use of a strong under-pressure.

12. Procedure according to one of the claims 8 to 11, **characterised by** that, first the rim (2) is transported via a transport means (19), on which the rim lies with the inner surface (6) facing downward and is centered using the sideward centering means (3),to the support means (2), then the protective insert, especially the funnel-shaped element (5), is moved from below against the inner surface (6) of the rim and a pressing down means (17), comprehensing especially a disc-shaped element (18), presses from above onto the rim (2), and then the material processing, especially the machining through a passage (15) of the funnel-shaped element (18) into the area of the wheel hub (10) of the rim is performed with the material processing means, in particular for machining (4), whereby the protective insert, especially the funnel-shaped element (5), is then moved back into the support means (2), whereat especially the processed rim (2) is furtr transported after the moving back of the protective insert, especially the funnel-shaped element (5), on the means for transport.

13. Procedure according to claims 8 to 12 charaterised by that the protective insert, in particular the funnel-shaped element (5), is pressed adapted in the area of the passage (15) mainly close to the inner surface (6) of the rim, so that processed material, in particular drilling swarfs (13), remain in the inner area (14) of the protective insert.

## Revendications

1. Dispositif (21) pour le traitement d'une jante (1) pour un véhicule, en particulier une automobile ou un camion, un de la jante, un moyen pour le centrage (3) de la jante, un moyen (26) pour l'enlèvement de matière, en particulier usinage, dans lequel la jante avec le côté intérieur (6) est disposée dans une direction (7) vers le bas sur le moyen de déposer (2) et sur le côté du moyen pour le centrage (3), en particulier, deux moyens de centrage (3), qui sont arrangés opposés, où la jante (2) avec un axe de moyeu de roue central (8) essentiellement concentrique par rapport à un axe d'usinage (9) des moyen de déposer (2) et/ou un rayon d'usinage prédéterminé pour aligner le axe d'usinage (9), dans lequel, dans une zone de moyeu de roue (10) d'une direction (11) du côté intérieur (6) de la jante (1) avec les moyens pour l'enlèvement du matériau (26), en particulier l'usinage (4) a la préparation du matériau, en particulier l'alésage au moyen de déposer (2) est faisable jusqu'à la zone du moyeu de roue (10), **caractérisé par le fait que** le moyen de déposer (2) de la jante ont un insert de protection, en particulier un élément en forme d'entonnoir (5), et doit être imposé dans un côté intérieur (6) de la jante, où en particulier l'insert de protection, en particulier l'élément en forme d'entonnoir (5), au moins à la préparation des matériaux, en particulier les alésages, tels que le filet arrangé est qu'il scelle une zone extérieure (12) de la jante essentiellement contre l'extérieur-pénétrant des copeaux de préparation de matériel, en particulier les copeaux de forage (13).

2. Dispositif selon la revendication 1, **caractérisé par le fait que** le moyen (26) pour le matériau à usiner, en particulier l'usinage, comprennent un moyen de perçage (4) et/ou un moyen de fraisage (27), en particulier un insert de fraisage (28), en particulier avec un plus petit diamètre (29) qu'un diamètre (32) de la préparation du matériau dans la jante, en particulier avec un moyen pour le plomb essentiellement circulaire et/ou hélicoïdal de l'insert de fraisage (28).

3. Dispositif selon l'une des revendications 1 à 2, **caractérisé en ce que** l'insert de protection, en particulier l'élément en forme d'entonnoir (5), n'a qu'un seul passage (15) à la zone du moyeu de roue (10), qui est relié à un diamètre de la préparation du matériau, en particulier un diamètre de un foret (16) et/ou un insert de fraisage, en particulier pour un mouvement circulaire, est conçu adapté.

4. Dispositif selon l'une des revendications 1 à 3, **caractérisé en ce que** la jante (2) est essentiellement fixée par un moyen de presser vers le bas (17) de la jante sur le moyen de déposer (2).

5. Dispositif selon l'une des revendications 1 à 4, **caractérisé en ce que** le moyen de presser vers le bas (17), qui a en particulier au moins un élément de force, en particulier un piston de force, en particulier un ou plusieurs pistons hydrauliques, et/ou un élément en forme de plaque (18), qui doit être mis en place sur la jante d'en haut et exerce ainsi une pression contre le moyen de déposer (2).

6. Dispositif selon l'une des revendications 1 à 5, **caractérisé en ce que** l'élément en forme de plaque (18) a des évidements (24) pour le centrage (3).

7. Dispositif selon l'une des revendications 1 à 6, **caractérisé en ce que** la jante par un moyen de transport (19) de la jante, en particulier un rouleau porte-courroie (20), en particulier conduit par les moyens de centrage (3), aux moyen de déposer (2) de la jante.

8. Procédure d'utilisation d'un dispositif pour le traitement (21) d'une jante (1) pour un véhicule, en particulier une automobile, en particulier selon l'une des revendications 1 à 7, dans lequel la jante (1) sur un moyen de déposer (2) de la jante avec un côté intérieur (6) est placé dans une direction (7) vers le bas, et la jante par un ou plusieurs moyens pour le centrage (3) de la jante est insérée et maintenue en position de centrage, **caractérisé en ce que** le moyen de déposer (2) ont un insert de protection, en particulier un élément en forme d'entonnoir (5), qui est inséré dans une zone intérieure (14) de la jante, et la jante avec un axe central de moyeu de roue (8) est essentiellement concentriques par rapport à un axe d'usinage (9) de moyen de déposer (2) et/ou à une diamètre d'usinage prédéterminée est aligné, dans lequel dans une zone de moyeu de roue (10) de la direction (11) du côté intérieur (6) de la jante avec un moyen pour le matériau à usiner (26), en particulier l'usinage (4), une préparation matérielle, en particulier alésage au moyen du perçage (4) et/ou d'un moyen de fraisage (27), en particulier un insert de fraisage (28), au moyen de déposer (2) sont effectués dans la zone du moyeu de roue (10).

9. Procédure selon la revendication 8, **caractérisée en ce que** par le biais de la tête essentiellement circulaire d'un insert de fraisage, en particulier en plus d'un fil circulaire perpendiculaire profonde distance peut être effectuée, de sorte que, en particulier, un ligne de fraisage de form de l'hélix est décrite.

10. Procédure selon la revendication 8 ou 9, **caractérisé en ce que** le moyen pour le matériau à usiner (26) à déplacer pour l'usinage dans la zone de moyeu de roue (10), en particulier pour être approché et/ou sur une trajectoire, en particulier la ligne circulaire (31) et/ou de ligne de l'hélix doit être transporté avec un moyen de fraisage (27), et/ou la jante (1) doit être déplacée par rapport aux moyens pour le matériau à usiner (26).

11. Procédure selon l'une des revendications 8 à 10, **caractérisée par le fait que** la préparation matérielle, en particulier l'usinage, en particulier l'alésage et/ou le broyage, n'est effectuée que jusqu'à présent, jusqu'à ce qu'un faible résidu (22) du travail, en particulier zone de moyeu de roue de perçage (10) à l'extérieur (23) de la jante s'arrête et puis une distance séparée du reste (22), en particulier, un poinçonnage du reste au moyen d'une perforation et/ou d'une succion au moyen d'un vide s'effectue.

12. Procédure selon l'une des revendications 8 à 11, caractérisé dans celui à-suivant la jante (2) par un moyen de transport (19), sur lequel la jante est placée avec le côté intérieur (6) vers le bas, et centrée par le moyen disposés latéralement pour le centrage (3) au est transporté de moyen de déposer (2), ensuite, l'insert de protection, en particulier l'élément en forme d'entonnoir (5), du fond contre l'intérieur (6) de la jante est rétracté et un moyen de presser vers le bas (17), en particulier comprend un élément en forme de plaque (18), de haut presser de la jante (2), puis avec les moyens pour l'enlèvement de matière, en particulier l'usinage (4), le levage de matériel, en particulier alésage par un passage (15) l'élément en forme d'entonnoir (18) dans la zone de moyeu de roue (10) la jante est en place, dans lequel l'insert de protection, en particulier l'élément en forme d'entonnoir (5), est repoussé dans le moyen de déposer (2), en particulier à la fermeture de la jante transformée (2) après le retour de l'insert de protection, en particulier le L'élément en forme d'entonnoir (5), sur lequel les moyens de transport (19) sont transportés plus loin.

13. Procédure selon l'une des revendications 8 à 12, **caractérisée en ce que** l'insert de protection, en particulier l'élément en forme d'entonnoir (5), est pressé dans la zone du passage (15) essentiellement étroitement à l'intérieur (6) de la jante, de sorte que travaillé matériau, en particulier les copeaux d'alésage (13) restent à l'intérieur (14) de l'insert de protection.
